# EUROPÄISCHE PATENTANMELDUNG

(11) **EP 4 513 061 A1**
(43) Veröffentlichungstag der Anmeldung: **26.02.2025**
(21) Anmeldenummer: 23193173.4
(22) Anmeldetag: 24.08.2023
(51) Int. Cl.: F16H 57/04, F03D 15/00, F03D 80/70, F16H 1/46

(54) **VERSCHLEISSARMES GETRIEBE**

(71) Anmelder: Flender GmbH, 46395 Bocholt (DE)
(72) Erfinder: HAAKE, Norbert, 46395 Bocholt (DE)
(74) Vertreter: Michalski Hüttermann & Partner Patentanwälte mbB

(57) **Zusammenfassung**

Es ist ein Getriebe (18) vorgesehen mit einer ersten Getriebestufe (26), einer in einem Drehmomentfluss der ersten Getriebestufe (26) unmittelbar nachfolgenden zweiten Getriebestufe (28), einem einen Schmierkanal (34) radial außen begrenzenden Hüllrohr (48) und einer in einem Übergangsbereich (40) zwischen der ersten Getriebestufe (26) und der zweiten Getriebestufe (28) vorgesehenen Lageranordnung (42) zur Lagerung des Hüllrohrs (48), wobei die Lageranordnung (42) ein erstes Lager (60) und ein zu dem ersten Lager (60) axial versetztes zweites Lager (61) aufweist und in axialer Richtung zwischen dem ersten Lager (60) und dem zweiten Lager (61) ein in radialer Richtung verlaufender und mit dem Schmierkanal (34) fluidisch kommunizierender Versorgungskanal (68) zur Versorgung der erste Getriebestufe (26) und/oder der zweiten Getriebestufe (28) mit Schmiermittel vorgesehen ist. Durch die zueinander axial beabstandeten Lager (60, 61) für das Hüllrohr (48) kann eine berührende Dichtung zwischen dem Schmierkanal (34) und dem Versorgungskanal (68) eingespart werden, so dass ein verschleißarmes geschmiertes Getriebe (18) ermöglicht ist.

## Beschreibung

Die Erfindung betrifft ein Getriebe, insbesondere Windkraftgetriebes für eine industrielle Windkraftanlage, mit dessen Hilfe ein Drehmoment und eine Drehzahl verschleißarm gewandelt werden kann.

Aus WO 2012/055832 A1 ist ein Windkraftgetriebe für eine Windkraftanlage mit einer ersten Planetenstufe und einer zweiten Planetenstufe bekannt, wobei zwischen einem Pichrohr und einem Hüllrohr ein ringförmiger Schmierkanal ausgebildet ist. Der Schmierkanal kann über eine Querbohrung mit einem in einer eingangsseitigen Nabe eines Planetenträgers der zweiten Planetenstufe ausgebildeten Ringkanal eines Schmierkanals fluidisch kommunizieren. Eine Abdichtung zwischen dem Hüllrohr und der Nabe erfolgt über in Dichtnuten der Nabe eingesetzte Rotationsdichtungen, an denen das Hüllrohr relativ drehbar abgleitet.

Es besteht ein ständiges Bedürfnis Verschleiß in Getrieben zu vermeiden.

Es ist die Aufgabe der Erfindung Maßnahmen aufzuzeigen, die ein verschleißarmes geschmiertes Getriebe ermöglichen.

Die Lösung der Aufgabe erfolgt durch ein Getriebe mit den Merkmalen des Anspruchs 1, einen Antriebsstrang mit den Merkmalen des Anspruchs 12, eine Industrieapplikation mit den Merkmalen des Anspruchs 14, sowie ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können, wobei der Schutzbereich durch die Ansprüche bestimmt wird. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft ein Getriebe, insbesondere Windkraftgetriebes für eine industrielle Windkraftanlage, mit einer ersten Getriebestufe zur Wandlung einer Drehzahl, einer in einem Drehmomentfluss der ersten Getriebestufe unmittelbar nachfolgenden zweiten Getriebestufe zur Wandlung einer von der ersten Getriebestufe eingeleiteten Drehzahl, einem einen Schmierkanal radial außen begrenzenden Hüllrohr und einer in einem Übergangsbereich zwischen der ersten Getriebestufe und der zweiten Getriebestufe vorgesehenen Lageranordnung zur zumindest mittelbaren Lagerung des Hüllrohrs, insbesondere an der ersten Getriebestufe und/oder an der zweiten Getriebestufe, wobei die Lageranordnung ein erstes Lager und ein zu dem ersten Lager axial versetztes zweites Lager aufweist und in axialer Richtung zwischen dem ersten Lager und dem zweiten Lager ein in radialer Richtung verlaufender und mit dem Schmierkanal fluidisch kommunizierender Versorgungskanal zur Versorgung der erste Getriebestufe und/oder der zweiten Getriebestufe mit Schmiermittel aus dem Schmierkanal vorgesehen ist.

Da das Hüllrohr nicht nur über ein einzelnes Lager, sondern über zwei Lager in dem Übergangsbereich gelagert ist, kann die axiale Ausrichtung des Hüllrohrs sehr präzise vorgegeben werden. Zudem sind das erste Lager und das zweite Lager in axialer Richtung zumindest über die Erstreckung des Versorgungskanals in axialer Richtung einer Hauptdrehachse des Getriebes zueinander beabstandet, so dass das erste Lager und das zweite Lager entsprechend stark beabstandet an dem Hüllrohr angreifen. Ein toleranzbedingtes Verkippen des Hüllrohrs zur Hauptdrehachse des Getriebes kann dadurch vermieden oder zumindest minimiert werden. Dies ermöglicht es eine berührende verschleißbehaftete Dichtung einzusparen und gegebenenfalls durch eine berührungslose Dichtung zu ersetzen, da ein Anschlagen der über einen Dichtspalt zueinander beabstandeten Dichtflächen aufgrund der zueinander axial beabstandeten Lager vermieden werden kann. Die Höhe des Dichtspalts kann sehr gering und die Länge des Dichtspalts sehr groß gewählt werden, ohne dass ein Anschlagen der Dichtflächen des Dichtspalts zu befürchten wären, so dass selbst bei einem hohen Förderdruck des Schmiermittels, insbesondere Schmieröl, allenfalls eine sehr geringe und vernachlässigbare Leckage zu erwarten ist. Durch die zueinander axial beabstandeten Lager für das Hüllrohr kann eine berührende Dichtung zwischen dem Schmierkanal und dem Versorgungskanal eingespart werden, so dass ein verschleißarmes geschmiertes Getriebe ermöglicht ist.

Da für den Versorgungskanal sowieso ein nicht von den Lagern blockierter Axialbereich vorgesehen sein muss, wird der Bauraumbedarf durch den axialen Abstand der Lager auch nicht signifikant erhöht. Es ist sogar möglich, dass die Lager selbst einen Betrag zur Abdichtung der Fluidübergabe zwischen dem Schmierkanal und dem relativ drehbaren Versorgungskanal leisten, beispielsweise indem die Lager für eine in das jeweilige Lager eintretende Leckage des Schmiermittels eine Spaltdichtung und/oder eine Labyrinthdichtung ausbilden. Zudem kann das jeweilige Lager als Leckage in das Lager eintretendes Schmiermittel für eine Schmierung des betroffenen Lagers nutzen, so dass sogar ein durch die berührungslose Abdichtung des Hüllrohrs verursachte Leckage des Schmiermittels das Schmiermittel noch einer vorteilhaften Funktion zugeführt werden kann.

Die erste Getriebestufe und/oder die zweite Getriebestufe kann beispielsweise als Planetengetriebe oder Stirnradstufe ausgestaltet sein. Vorzugsweise findet in der Getriebestufe eine von i = 1,0 verschiedene Übersetzung statt. Insbesondere ist von einer designierten Eingangsseite der jeweiligen Getriebestufe zu einer designierten Ausgangsseite der Getriebestufe eine Übersetzung ins Schnelle vorgesehen. Besonders bevorzugt erfolgt ein Drehmomentfluss des Getriebes unverzweigt über die erste Getriebestufe und die zweite Getriebestufe, so dass die Getriebestufen im Wesentlichen die volle Leistung übertragen. Das Getriebe kann insbesondere mehr als zwei Getriebestufen aufweisen, so dass auch eine dritte Getriebestufe oder auch zusätzlich eine vierte Getriebestufe und so weiter vorgesehen sein können. Besonders bevorzugt ist auch ein Paar von einander nachfolgenden Getriebestufen, die von der ersten und zweiten Getriebestufe verschieden sind, analog zu der ersten und zweiten Getriebestufe ausgebildet. Beispielsweise ist bezüglich der fluidischen Verbindung des Schmierkanals mit dem Versorgungskanal und der Lageranordnung die eingangsseitige Getriebestufe dieses Paars analog zu dem ersten Getriebestufe und die ausgangsseitige Getriebestufe analog zu der zweiten Getriebestufe ausgestaltet.

Der Schmierkanal kann aus einer Druckquelle, beispielsweise Pumpe, mit dem Schmierkanal beaufschlag sein. Ein Strömungsquerschnitt des Schmierkanals ist insbesondere für einen vorbekannten abgeforderten Massenstrom an Schmiermittel dimensioniert. Der Strömungsquerschnitt des Schmierkanals ist in einem gemeinsamen Axialbereich mit dem Hüllrohr zu einem Großteil ringförmig.

Der Versorgungskanal kann zumindest mit einem Anteil nach radial außen von den Lagern wegführen. Von dem Versorgungskanal können verschiedene Kanäle abzweigen, um die jeweiligen stromabwärts liegenden Schmierstellen mit Schmiermittel zu versorgen. Der Versorgungskanal kann in einen Zwischenraum zwischen den Lagern radial oder unter einem Winkel zu einer Radialrichtung einmünden und Schmiermittel aufnehmen, das ausschließlich oder anteilig in radialer Richtung von der Lageranordnung weggeführt wird.

Das Schmiermittel, das in Getriebe übergeben werden soll, ist insbesondere ein Schmieröl, wobei prinzipiell auch andere Fluide, insbesondere Flüssigkeiten, Suspensionen oder Emulsionen, mit der Fluidübergabeeinrichtung übergeben werden können. Zusätzlich oder alternativ kann das Schmiermittel auch eine Kühlfunktion übernehmen, so dass Schmiermittel auch ein Kühlmittel sein kann.

Das Hüllrohr kann eine im Wesentlichen zylindrische Form aufweisen. Vorzugsweise weist das Hüllrohr mindestens eine Montageschräge auf, um das Hüllrohr in die Lageranordnung und/oder einem Bauteil der ersten und/oder zweiten Getriebestufe einstecken zu können. Das Hüllrohr kann eingangsseitig, also im eingebauten Zustand rotorseitig, zum Schmierkanal und/oder ausgangsseitig, also im eingebauten Zustand generatorseitig, zum Schmierkanal im Übergangsbereich eine in radialer Richtung weisende Öffnung aufweisen, um den im Inneren des Hüllrohrs vorgesehenen Schmierkanal mit dem außerhalb des Hüllrohrs vorgesehen Versorgungskanal fluidisch zu verbinden. Insbesondere ist das Hüllrohr an mindestens einer axialen Stirnseite mit Hilfe eines Endstücks verschlossen, um ein Auslaufen des Schmiermittels aus dem Schmierkanal zu verhindern und/oder einen signifikanten Förderdruck innerhalb des Schmierkanals zulassen zu können.

Der Übergangsbereich ist ein sich in axialer Richtung erstreckender Bereich, in dem eine drehmomentübertragende Koppelung der ersten Getriebestufe mit der zweiten Getriebestufe erfolgt. Wenn die erste Getriebestufe und die zweite Getriebestufe als Planetengetriebe ausgestaltet sind, kann der Übergangsbereich als ein axialer Bereich definiert werden, der durch einen axialen Abstand zwischen Planetenrädern der ersten Getriebestufe und Planetenrädern der zweiten Getriebestufe gegeben ist.

Die Lageranordnung kann das Hüllrohr lagern und ist hierzu an der ersten Getriebestufe und/oder an der zweiten Getriebestufe abgestützt. Vorzugsweise stütz sich die Lageranordnung einer Getriebekomponente ab, die einen Beitrag zu Drehzahlwandlung leistet und hierzu insbesondere drehbar ausgeführt ist. Vorzugsweise stützt sich die Lageranordnung mit ihrem ersten Lager und/oder ihrem zweiten Lager an einer Sonnenwelle der als Planetengetriebe ausgestalteten ersten Getriebestufe und/oder einer Nabe eines Planetenträgers der als Planetengetriebe ausgestalteten zweiten Getriebestufe ab, wobei die Sonnenwelle und die Nabe im Übergangsbereich auch einstückig ausgestaltet sein können. Das erste Lager und/oder das zweite Lager der Lageranordnung können insbesondere als Wälzlager, vorzugsweise Rillenkugellager, ausgestaltet sein. Das jeweilige Lager kann einen mit der Drehzahl des Hüllrohrs rotierbaren Innenring und einen Außenring aufweisen, wobei der Außenring drehfest mit einer Komponente der ersten Getriebestufe und/oder der zweiten Getriebestufe direkt oder indirekt befestigt sein kann. Der Innenring kann direkt mit dem Hüllrohr befestigt sein. Vorzugsweise ist der jeweilige Innenring mit einer gemeinsamen Lagerhülse drehfest befestigt, wobei die Lagerhülse mit dem Hüllrohr drehfest gekoppelt sein kann. Die Lagerhülse erleichtert die exakte Ausrichtung des Hüllrohrs und ermöglicht eine einfacherer Montage des Hüllrohrs. Insbesondere ist es möglich, dass das jeweilige Lager an einer von dem anderen Lager weg weisenden Axialseite ein Dichtelement aufweist, um in das Lager eindringendes Schmiermittel in dem Lager zur Schmierung des Lagers zurückzuhalten.

Industrielle Windkraftanlagen sind vornehmlich zur Energieerzeugung aus Windkraft ausgestaltet, wobei aus der Windkraft gewonnene elektrische Energie insbesondere in ein öffentliches Stromnetz eingeleitet werden kann, um Energieverbraucher mit regenerativ erzeugter Energie versorgen zu können. Ein für eine industrielle Windkraftanlage ausgestaltetes Windkraftgetriebe ist insbesondere für eine Leistung über 1,0 MW, vorzugsweise über 5,0 MW und besonders bevorzugt über 7,5 MW ausgelegt und entsprechend robust und großvolumig ausgestaltet.

Insbesondere ist vorgesehen, dass das erste Lager nur über einen ersten Leckagespalt zur Schmierung des ersten Lagers und/oder das zweite Lager nur über einen zweiten Leckagespalt zur Schmierung des zweiten Lagers mit dem Versorgungskanal fluidisch kommuniziert. Grundsätzlich ist es möglich die eingesparte berührende Dichtung zwischen dem Schmierkanal und dem Versorgungskanal durch eine Spaltdichtung zu ersetzen, die für eine möglichst geringe Leckage ausgelegt ist. Es wurde jedoch erkannt, dass das Schmiermittel auch für die Schmierung des ersten Lagers und/oder zweiten Lagers genutzt werden kann. Dies ermöglicht es die Spalthöhe und/oder die Spaltlänge der Spaltdichtung zwischen dem Schmierkanal und dem Versorgungskanal für eine bewusste Schmierung des jeweiligen Lagers zu dimensionieren. Anstatt die eingesparte berührende Dichtung durch eine für eine möglichst geringe Leckage dimensionierte berührungslose Spaltdichtung zu ersetzen, wird die berührende Dichtung durch den einen bestimmten Leckagestrom bewusst zulassenden Leckagespalt ersetzt. Die Spalthöhe und die Spaltlänge des Leckagespalts sind im Gegensatz zu einer berührungslosen Spaltdichtung nicht dahingehend dimensioniert, dass bei einer möglichst minimalen Leckage ein Anschlagen der Dichtflächen des Spaltdichtung gerade noch sicher vermieden sind, sondern dahingehend, dass bei einem im Betrieb zu erwartenden Förderdruck in dem Schmierkanal und in dem Versorgungskanal ein für die Schmierung des jeweiligen Lagers ausreichender Schmiermittelstrom durch den Leckagespalt hindurch vorliegt. Dies kann im Vergleich zu einer berührungslosen Spaltdichtung zu einer größeren Spalthöhe und/oder kürzeren Spaltlänge für den Leckagespalt führen. Das jeweilige Lager kann als Leckage in das Lager eintretendes Schmiermittel für eine Schmierung des betroffenen Lagers nutzen, so dass eine automatische Schmierung der Lager im laufenden Betrieb des Getriebes vorgesehen sein kann, ohne dass hierzu eine separate Schmierung der Lager vorgesehen werden muss. Der Bauraumbedarf kann dadurch reduziert sein.

Vorzugsweise ist das Hüllrohr an mindestens einen Innenring der Lageranordnung über mindestens eine in radialer Richtung elastisches Dichteinheit befestigt, wobei insbesondere die Dichteinheit zum elastischen Ausgleich eines Radialversatzes zwischen der ersten Getriebestufe und der zweiten Getriebestufe dimensioniert ist. Die Dichteinheit kann den Schmierkanal unter Berücksichtigung eines radialen Versatzes des Hüllrohrs abdichten und diesen Versatz ausgleichen. Durch die Elastizität der Dichteinheit kann auch die Montage des Hüllrohrs in der Lageranordnung vereinfacht werden und eine Beschädigung am stirnseitigen Ende des Hüllrohrs während der Montage vermieden werden. Zudem kann berücksichtigt werden, dass aufgrund von Herstellungs- und Montagetoleranzen leicht ein radialer Versatz zwischen der ersten Getriebestufe und der zweiten Getriebestufe auftreten kann, der durch die Elastizität der insbesondere ringförmigen Dichteinheit ausgeglichen werden kann. Besonders bevorzugt weist das Hüllrohr ein zu einem Großteil in der ersten Getriebestufe verlaufendes erstes Teilhüllrohr und ein zu einem Großteil in der zweiten Getriebestufe verlaufendes zweites Teilhüllrohr auf, wobei das erste Teilhüllrohr und das zweite Teilhüllrohr zur Ausbildung einer mit dem Versorgungskanal fluidisch kommunizierenden Ringnut in axialer Richtung zueinander beabstandet angeordnet sind. Das Hüllrohr kann beispielsweise zweiteilig ausgeführt sein, wobei das erste Teilhüllrohr und das zweite Teilhüllrohr über die Lageranordnung miteinander verbunden sein können. Vorzugsweise kann die Lageranordnung, beispielsweise über eine Lagerbuchse, eine Steckverbindung der Teilhüllrohre zu dem gemeinsamen Hüllrohr bereitstellen. Durch den axialen Abstand der aufeinander zu weisenden Stirnseiten der Teilhüllrohre ergibt sich in dem Axialbreich zwischen den Teilhüllrohren automatisch eine Ringnut, mit dem der Versorgungskanal ohne Ausbildung einer separaten Ringnut in der Lageranordnung fluidisch kommunizieren kann. Eine in einem separaten Fertigungsschritt einzubringende Querbohrung in dem Hüllrohr, um eine fluidische Verbindung des im Inneren des Hüllrohrs vorgesehenen Schmierkanals mit dem Versorgungskanal herzustellen.

Insbesondere ist ein von dem ersten Teilhüllrohr begrenzter erster Teilschmierkanal und ein von dem zweiten Teilhüllrohr begrenzter zweiter Teilschmierkanal über eine zwischen dem ersten Lager und dem zweiten Lager freigehaltene Ringkammer fluidisch verbunden. Da das erste Lager und das zweite Lager sowieso axial zueinander beabstandet angeordnet sein sollen, kann der sich zwischen den beiden Lagern ergebene Zwischenraum als Ringkammer genutzt werden, in den eine Öffnung des Versorgungskanals einmünden kann. Dies erleichtert es eine Drehdurchführung und/oder eine Fluidübergabe zwischen zwei sich relativ zueinander drehenden Bauteilen auszubilden.

Vorzugsweise ist das Hüllrohr, insbesondere das erste Teilhüllrohr und das zweite Teilhüllrohr, mit einer von dem ersten Lager und dem zweiten Lager gelagerten Lagerbuchse drehfest verbunden. Die Lagerbuchse kann insbesondere eine Steckverbindung zwischen dem erste Teilhüllrohr und dem zweiten Teilhüllrohr herbeiführen. Die Lagerbuchse kann insbesondere an beiden Innenringen der Lager angreifen und dadurch eine axiale Ausrichtung mit hoher Genauigkeit erreichen. Vorzugsweise erstreckt sich sie Lagerbuchse in axialer Richtung über das erste Lager und/oder das zweite Lager hinweg, so dass sich für das in der Lagerbuchse eingesteckte, gegebenenfalls mehrteilige, Hüllrohr eine entsprechend genaue axiale Ausrichtung vorgeben lässt.

Besonders bevorzugt sind das Hüllrohr und ein Pitchrohr zur Durchfuhr von Leitungen einer Blatteinstellwinkelregelung ("Pitchregelung") für einen Windrotor mit einer gemeinsamen Getriebekomponente, insbesondere der ersten Getriebestufe, drehfest befestigt, wobei insbesondere eine radial äußere Mantelfläche des Pitchrohrs den Schmierkanal zumindest über einen axialen Teilbereich radial innen begrenzt. Das Pitchrohr kann radial zentral entlang der Hauptdrehachse der Getriebestufen des Getriebes vorgesehen sein. Richtungsangaben wie radial, axial und tangential werden in Bezug zur Hauptdrehachse verwendet. Der von dem Hüllrohr radial außen begrenzte Schmierkanal ist dadurch radial außerhalb des Pitchrohrs vorgesehen, wobei insbesondere die äußere Mantelfläche des Pitchrohrs zumindest über einen axialen Teilbereich den Schmierkanal radial innen begrenzen kann. Der Materialaufwand, um den Schmierkanal auszubilden kann dadurch minimiert werden. Da das Hüllrohr und das Pitchrohr mit der gleichen Getriebekomponente verbunden sind, drehen das Hüllrohr und das Pitchrohr mit der gleichen Drehzahl, das heißt eine Relativdrehzahl zwischen dem Hüllrohr und der Pitchrohr beträgt im Wesentlichen Null. Dies ermöglicht es die radiale Erstreckung des Schmierkanals gering zu halten, ohne dass unnötige Flüssigreibungseffekte in Umfangsrichtung auftreten, die zu einem unnötig hohen Druckverlust bei der Förderung des Schmiermittels durch den Schmierkanal führen würde. Hierbei kann ausgenutzt werden, dass für eine präzise axiale Ausrichtung des Hüllrohrs sowieso eine Lagerung des Hüllrohrs im Übergangsbereich zwischen den Getriebestufen und damit eher im Inneren des Getriebes vorgesehen ist und leicht eine Befestigung sowohl des Hüllrohrs als auch des Pitchrohrs an einem axialen Ende des Getriebes vorgenommen werden kann.

Insbesondere ist an einer zu der Lageranordnung axial beabstandeten Fluidübergabe zwischen dem Hüllrohr und einem relativ drehbaren Bauteil eine berührungslose Spaltdichtung vorgesehen. Da die axiale Ausrichtung des Hüllrohrs durch die Lageranordnung mit einer so hohen Präzision vorgegeben ist, dass eine berührende Dichtung zwischen relativ zueinander drehenden Bauteilen im Übergangsbereich eingespart werden kann, kann dies auch an dem anderen Ende des Schmierkanals vorgesehen werden, wo durch das Hüllrohr hindurch oder an dem Hüllrohr vorbei das Schmiermittel an den Schmierkanal übergeben wird. Durch die präzise Ausrichtung des Hüllrohrs ist es auch an einer zum Übergangsbereich axial beabstandeten Stelle möglich eine berührende Dichtung durch eine berührungslose Spaltdichtung zu ersetzen, wodurch wiederum Verschleiß vermieden werden kann.

Vorzugsweise ist ein Innenrohr zur radial inneren Begrenzung des Schmierkanals vorgesehen, wobei das Innenrohr über ein den Schmierkanal axial verschließendes Endstück drehfest mit dem Hüllrohr und/oder mit der/einer Lagerbuchse der Lageranordnung verbunden ist. Das Endstück kann einen axialen Abschluss für den Schmierkanal ausbilden. Gleichzeitig kann das Endstück verwendet werden, um das Hüllrohr und das Innenrohr oder alternativ das Pitchrohr auf einem definierten radialen Abstand miteinander zu verbinden. Zusätzlich ist es möglich über das Endstück die aus dem Hüllrohr einerseits und dem Innenrohr oder Pitchrohr andererseits in der Lageranordnung zu lagern und/oder mit einem gelagerten Bauteil, insbesondere die Lagerbuchse, zu verbinden. Vorzugsweise ist das Innenrohr ein von dem Pitchrohr verschiedenes Rohr, so dass die Position des Schmierkanals nicht durch das Pitchrohr vorgegeben ist und es leichter ist den Strömungsquerschnitt des zwischen dem Hüllrohr und dem Innenrohr ausgebildeten Schmierkanal an die Schmierbedürfnisse des Getriebes anzupassen, ohne dass dies konstruktive Anforderungen an das Pitchrohr stellt.

Besonders bevorzugt sind die erste Getriebestufe und die zweite Getriebestufe als Planetengetriebe ausgestaltet, wobei insbesondere die Lageranordnung an einer Sonnenwelle der ersten Getriebestufe und/oder an einem Planetenträger der zweiten Getriebestufe lagert. Durch die als Planetengetriebe ausgestalteten Getriebestufen kann eine besonders große Übersetzung ins Schnelle bereitgestellt werden. Hierbei erfolgt insbesondere eine Verbindung der Sonnenwelle der ersten Getriebestufe mit einer Nabe des Planetenträgers der zweiten Getriebestufe. Diese Verbindung führt zu einem in axialer Richtung vergleichsweise langen Übergangsbereich, der im Wesentlichen in der Art einer Hohlwelle mit vergleichsweise großen Innendurchmesser ausgeformt ist und dadurch in axialer Richtung ausreichenden Bauraum für die Lageranordnung mit den in axialer Richtung bewusst stark beabstandeten Lagern bereitstellt.

Insbesondere führt der Versorgungskanal sowohl zu zumindest einer Getriebekomponente der ersten Getriebestufe als auch zu einer Getriebekomponente der zweiten Getriebestufe. Da der Versorgungskanal in dem zwischen den beiden benachbarten Getriebestufen vorgesehenen Übergangsbereich mit einem Anteil in radialer Richtung nach außen abgeht, ist es leicht möglichen den Versorgungskanal entgegen der Drehmomentflussrichtung weiter in die erste Getriebestufe und entlang der Drehmomentflussrichtung weiter in die zweite Getriebestufe verlaufen beziehungsweise verzweigen lassen. Beispielsweise kann der Versorgungskanal für die Schmierung eines Zahneingriffs zwischen einem Sonnenrad und den Planetenrädern der ersten Getriebestufe und/oder für eine drehbare Schmierung von Planetenrädern der zweiten Getriebestufe auf zugehörigen Planetenbolzen verwendet werden.

Ein weiterer Aspekt der Erfindung betrifft einen Antriebsstrang für eine industrielle Windkraftanlage mit einem Getriebe, das wie vorstehend beschrieben aus- und weitergebildet sein kann, zur Wandlung einer durch Windkraft eingeleiteten Drehzahl. Vorzugsweise ist eine von der zweiten Getriebestufe wegweisende Eingangsseite der ersten Getriebestufe mit einem windkraftbetriebenen Windrotor gekoppelt, wobei eine von der ersten Getriebestufe wegweisende Ausgangsseite der zweiten Getriebestufe mittelbar oder unmittelbar mit einem Rotor einer elektrischen Maschine zur Erzeugung von elektrischer Energie aus Windkraft gekoppelt ist. Durch die zueinander axial beabstandeten Lager für das Hüllrohr kann eine berührende Dichtung zwischen dem Schmierkanal und dem Versorgungskanal im Getriebe eingespart werden, so dass ein verschleißarmer Antriebsstrang ermöglicht ist.

Ein weiterer Aspekt betrifft eine Industrieapplikation mit einem Antriebsmittel, einem drehmomentübertragend mit dem Antriebsmittel verbundenen Getriebe, das wie vorstehend beschrieben aus- und weitergebildet sein kann, und einer drehmomentübertragend mit dem Getriebe verbundenen mechanischen Anwendung. Das Antriebsmittel kann beispielsweise als elektrische Maschine, Brennkraftmaschine, Hydraulikmotor oder windkraftgetriebener Rotor ausgestaltet sein kann. Das Antriebsmittel kann mit dem Getriebe zur Wandlung eines Drehmoments und einer Drehzahl der von dem Antriebsmittel erzeugten Leistung gekoppelt sein. Das Getriebe der Industrie-Applikation ist wiederum drehmomentübertragend mit der mechanischen Anwendung gekoppelt, in der über das Getriebe eingeleitete mechanische Energie genutzt werden kann. Bei der mechanischen Anwendung handelt es sich beispielsweise um eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse, Schrottpresse, Zerkleinerer für recyclingfähige Materialen aus, gegebenenfalls zuvor getrennten und/oder sortierten, Abfällen oder Ähnliches. Die Industrieapplikation kann insbesondere wie vorstehend anhand der anderen Aspekte erläutert aus- und weitergebildet sein. Durch die zueinander axial beabstandeten Lager für das Hüllrohr kann eine berührende Dichtung zwischen dem Schmierkanal und dem Versorgungskanal eingespart werden, so dass eine verschleißarme geschmierte Industrie-Applikation ermöglicht ist.

Ein Aspekt der Erfindung betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Getriebe, das wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile der Fluidübergabeeinrichtung, insbesondere durch 3D-Druck, und/oder bei einer Verarbeitung durch eine Datenverarbeitungseinrichtung zur Durchführung einer technischen Simulation eine Simulation der Funktionsweise der Fluidübergabeeinrichtung durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise der betrachteten Vorrichtung zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können, wobei der Schutzbereich durch die Ansprüche bestimmt wird. Es zeigen:
Fig. 1: eine schematische perspektivische Ansicht einer Windkraftanlage,
Fig. 2: eine schematische Schnittansicht einer ersten Ausführungsform eines Getriebes für die Windkraftanlage aus Fig. 1,
Fig. 3: eine schematische Detailansicht einer Lageranordnung des Getriebes aus Fig. 2,
Fig. 4: eine schematische rotorseitige Detailansicht des Getriebes aus Fig. 2,
Fig. 5: eine schematische generatorseitige Detailansicht des Getriebes aus Fig. 2,
Fig. 6: eine schematische Detailansicht einer Lageranordnung einer zweiten Ausführungsform eines Getriebes für die Windkraftanlage aus Fig. 1,
Fig. 7: eine schematische rotorseitige Detailansicht des Getriebes aus Fig. 6,
Fig. 8: eine schematische generatorseitige Detailansicht des Getriebes aus Fig. 6,
Fig. 9: eine schematische Schnittansicht einer dritten Ausführungsform eines Getriebes für die Windkraftanlage aus Fig. 1 und
Fig. 10: eine schematische Detailansicht des Getriebes aus Fig. 9.

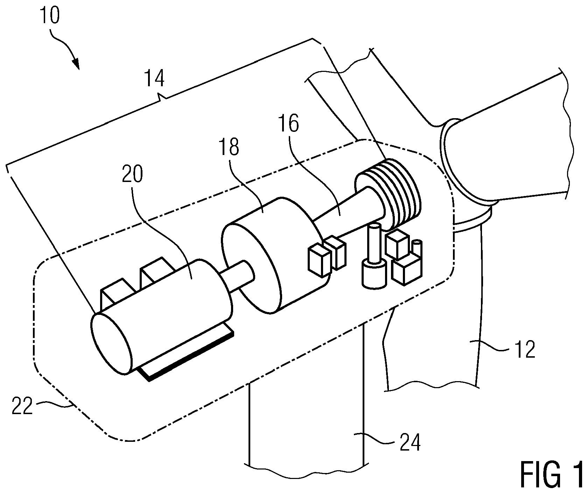

Die in Fig. 1 dargestellte industrielle Windkraftanlage 10 kann zur Erzeugung von elektrischer Energie aus Windkraft verwendet werden. Hierzu weist die Windkraftanlage 10 einen Windrotor 12 auf, der durch Wind windkraftbetrieben in Drehung versetzt werden kann. Der Windrotor 12 ist an einen Antriebsstrang 14 angekoppelt. Hierzu ist der Windrotor 12 mit einer Windrotorwelle 16 verbunden, die innerhalb des Antriebsstrangs 14 mit einem Getriebe 18 gekoppelt ist, um das über den Windrotor 12 und die Windrotorwelle 16 eingeleitete Drehmoment zu wandeln. Das in dem Getriebe 18 gewandelte Drehmoment wird einer im Generatormodus betriebenen elektrischen Maschine 20 zugeführt. Die von der elektrischen Maschine 20 erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist.

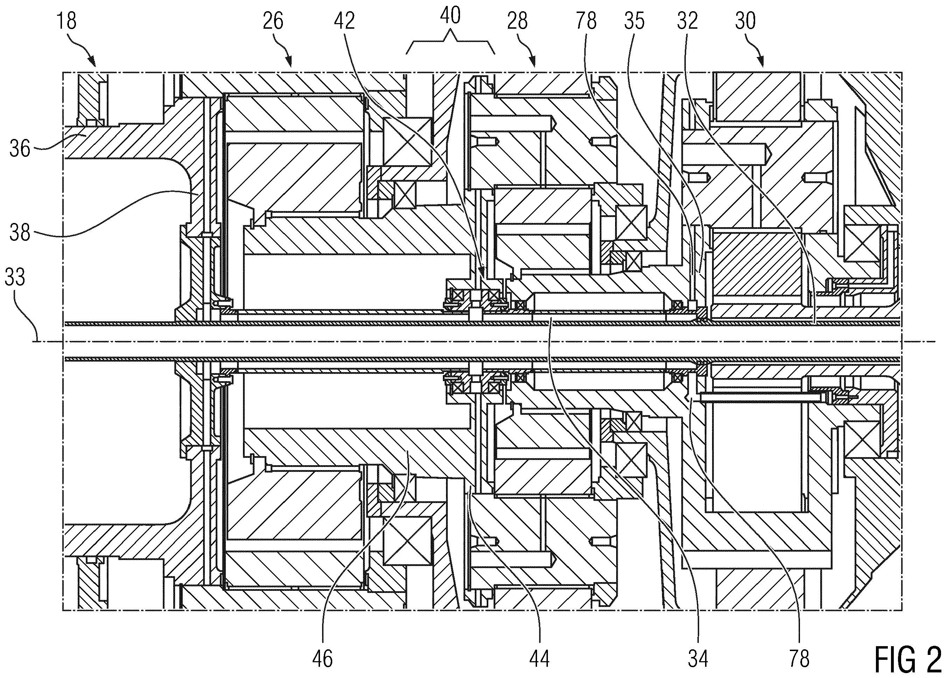

Das in Fig. 2 dargestellte Ausführungsbeispiel des Getriebes 18 weist eine mit der Windrotorwelle 16 des Windrotors 12 verbindbare erste Getriebestufe 26 auf, die mit einer in Drehmomentflussrichtung nachfolgenden zweiten Getriebestufe 28 gekoppelt ist, die wiederum mit einer dritten Getriebestufe 30 gekoppelt ist. Im dargestellten Ausführungsbeispiel sind die Getriebestufen 26, 28, 30 als Planetengetriebe ausgestaltet. Je nach Anwendungsfall kann die dritte Getriebestufe 30 auch weggelassen sein. Das Getriebe 18 ist über seine gesamte axiale Erstreckung von einem zentral angeordneten Pitchrohr 32 durchzogen, wobei das Pitchrohr 32 koaxial zu einer Hauptdrehachse 33 des Getriebes 18 verläuft. Richtungsangaben wie radial, axial und tangential werden in Bezug zur Hauptdrehachse verwendet. Das Pitchrohr 32 bildet eine radial innere Begrenzung eines Schmierkanals 34 aus, der aus einem dritten Planetenträger 35 der dritten Getriebestufe 30 gespeist wird. Falls keine Getriebestufe 30 vorgesehene ist, kann der Schmierkanal aus einem feststehenden Getriebegehäuse gespeist werden. Der Schmierkanal 34 kann ein seinem zum Windrotor 12 weisenden Ende in eine erste Nabe 36 eines ersten Planetenträgers 38 der ersten Getriebestufe 26 einmünden und in einem Übergangsbereich 40 zwischen der ersten Getriebestufe 26 und der zweiten Getriebestufe 28 eine Lageranordnung 42 nach radial außen durchdringen, um Schmiermittel in einen zweiten Planetenträger 44 der zweiten Getriebestufe 28 und/oder in eine erste Sonnenwelle 46 der ersten Getriebestufe 26 zu fördern.

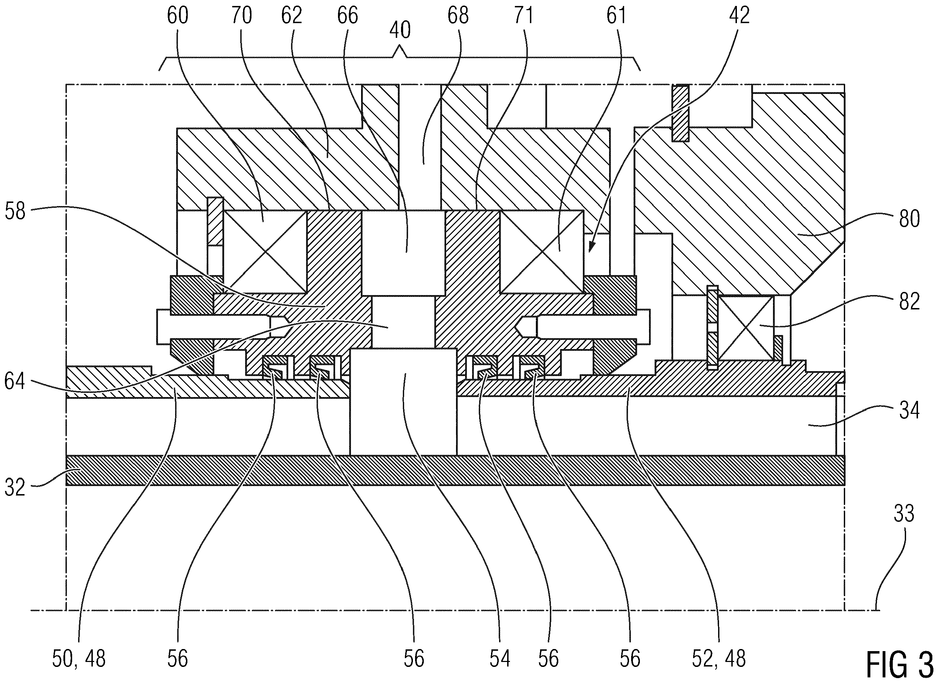

Wie in Fig. 3 dargestellte ist, ist der Schmierkanal 34 radial außen durch ein Hüllrohr 48 begrenzt, das im dargestellten Ausführungsbeispiel durch ein erstes Teilhüllrohr 50 und ein zweites Teilhüllrohr 52 zusammengesetzt ist. Das erste Teilhüllrohr 50 und das zweite Teilhüllrohr 52 sind an ihren aufeinander zu weisenden Stirnseiten zueinander beabstandet, so dass sich zwischen den Teilhüllrohren 50, 52 eine Ringnut 54 ergibt. Das erste Teilhüllrohr 50 und das zweite Teilhüllrohr 52 sind jeweils über radial elastische Dichteinheiten 56, beispielsweise Radialwellendichtringe, mit einer Lagerbuchse 58 verbunden. Das erste Teilhüllrohr 50 und das zweite Teilhüllrohr 52 können jeweils in axialer Richtung in die Lagerbuchse 58 eingesteckt werden und dadurch in Kontakt mit der zugeordneten Dichteinheit 56 gelangen. Vorzugsweise sind mindestens zwei Dichteinheiten 56 für jedes Teilhüllrohr 50, 52 vorgesehen, um eine möglichst gute Abdichtung des Schmierkanals 34 und der Ringnut 54 zu erreichen.

Die Lagerbuchse 58 und damit auch das Hüllrohr 48 ist über ein erstes Lager 60 und ein in axialer Richtung deutlich zu dem ersten Lager 60 beabstandeten zweiten Lager 61, die vorzugsweise als Wälzlager, insbesondere Rillenkugellager, ausgestaltete sind, an einer Nabe 62 gelagert. Die Nabe 62 ist im dargestellten Ausführungsbeispiel sowohl Teil des zweiten Planetenträgers 44 der zweiten Getriebestufe 28 als auch der ersten Sonnenwelle 46 der ersten Getriebestufe 26. Die Lagerbuchse 58 weist einen Durchlass 64 auf, der radial innen mit der Ringnut 54 zwischen den Teilhüllrohren 50, 52 fluidisch kommuniziert. Radial außerhalb des Durchlasses 64 erstreckt sich die Lagerbuchses 58 in der Nähe des jeweiligen Lagers 60, 61, wobei eine mit dem Durchlass 64 fluidisch kommunizierende Ringkammer 66 freigehalten ist. Die Ringkammer 66 wiederum kann mit einem in der Nabe 62 beginnenden Versorgungskanal 68 fluidisch kommunizieren. Zwischen der Lagerbuchse 58 und der Nabe 62 ist ein zu dem ersten Lager 60 führender erster Leckagespalt 70 und ein zu dem zweiten Lager 61 führender zweiter Leckagespalt 71 ausgebildet, die im Gegensatz zu einer Spaltdichtung einen ausreichend großen Schmiermittelstrom passieren lassen, um die Lager 60, 61 zu schmieren. Eine verschleißbehaftet berührende Dichtung zur Abdichtung der Fluidübergabe zwischen der Lagerbuchse 58 und der relativ drehenden Nabe 62 der ersten und zweiten Getriebestufe 26, 28 ist dadurch vermieden.

Zusätzlich oder alternativ kann die Lageranordnung 42 auch in einem Übergangsbereich zwischen der zweiten Getriebestufe 28 und der dritten Getriebestufe 30 vorgesehen sein. Die vorstehenden und nachfolgenden Ausführungen würden in diesem Fall in Gänze oder in Teilen analog gelten.

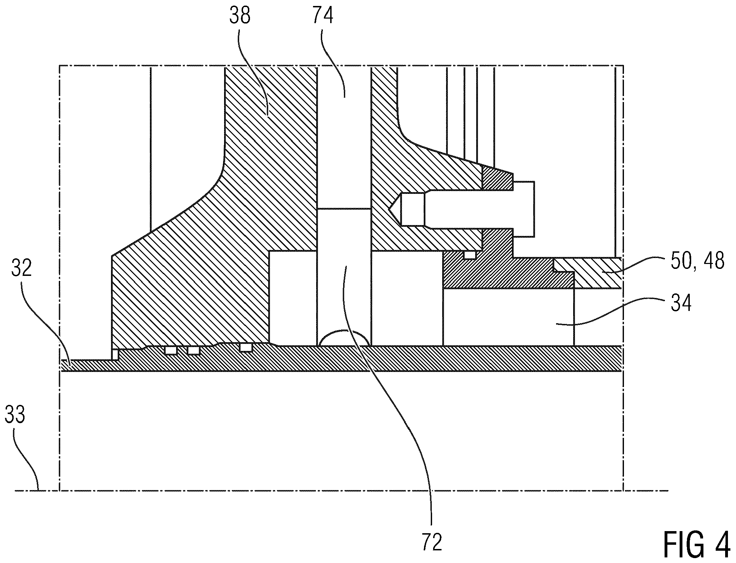

Wie in Fig. 4 dargestellt ist, kann das Hüllrohr 48 beziehungsweise das erste Teilhüllrohr 50 an seinem von der zweite Getriebestufe 28 weg weisenden Ende mit dem ersten Planetenträger 38 der ersten Getriebestufe 26 befestigt, insbesondere verschraubt sein. Zusätzlich ist es möglich, dass das Pitchrohr 32 ebenfalls mit dem ersten Planetenträger 38 drehfest verbunden, beispielsweise eingepresst, ist. Das Hüllrohr 48 und das Pitchrohr 32 weisen dadurch immer die gleiche Drehzahl auf, so dass Flüssigreibungseffekte im Schmierkanal 34 vermieden oder zumindest minimiert werden können. Das Pitchrohr 32 steht in axialer Richtung auf den Windrotor 12 zu aus dem ersten Teilhüllrohr 50 ab. Dadurch ergibt sich zwischen einer radial bis zum Pitchrohr 32 weisenden Wandung des ersten Planetenträgers 38 und einer axialen Stirnseite des ersten Teilhüllrohrs 50 eine weitere Ringnut 72, die mit einem weiteren Versorgungskanal 74 des ersten Planetenträgers 38 fluidisch kommuniziert. Durch die drehfeste Verbindung des Pitchrohrs 32 und des Hüllrohrs 48 mit dem ersten Planetenträger 36 sind relativ zueinander drehende Bauteile vermieden, so dass auch keine verschleißbehaftete berührende Dichtung zwischen relativ zueinander drehenden Bauteilen vorgesehen werden muss.

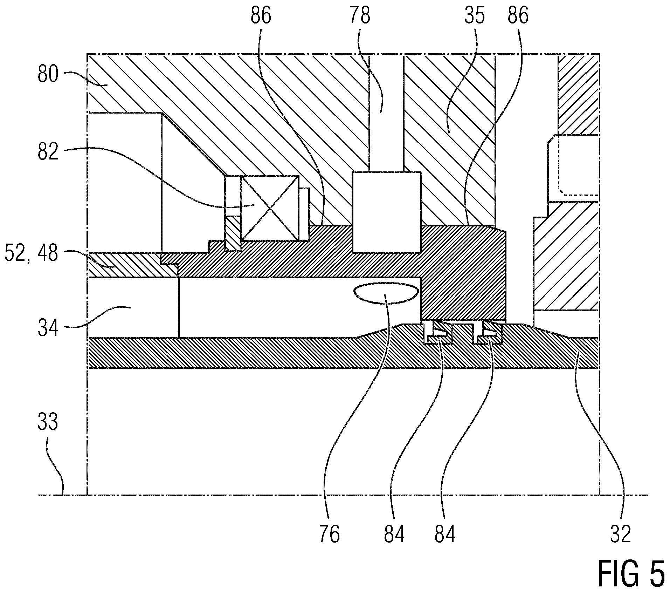

Wie in Fig. 5 dargestellt ist, kann der Schmierkanal 34 über eine Durchgangsöffnung 76 des zweiten Teilhüllrohrs 52 mit einer Zuleitung 78 fluidisch kommunizieren. Im dargestellten Ausführungsbeispiel ist die Zuleitung 78 in dem dritten Planetenträger 35 der dritten Planetenstufe 30 vorgesehen. Der dritte Planetenträger 35 kann einstückig mit einer zweiten Sonnenwelle 80 der zweiten Getriebestufe 28 ausgeführt sein. Das Hüllrohr 48 ist im Bereich des zweiten Teilhüllrohrs 52 über Wellenlager 82, wie in Fig. 2 dargestellt ist, benachbart zur Lageranordnung 42 an der zweiten Sonnenwelle 80 und, wie in Fig, 5 dargestellt ist, an dem dritten Planetenträger 35 gelagert. Das Pitchrohr 32 ist über Dichtringe 84 an dem Hüllrohr 48 beziehungsweise an dem zweiten Teilhüllrohr 52 abgedichtet. Das Hüllrohr 48 beziehungsweise das zweite Teilhüllrohr 52 kann gegenüber dem dritten Planetenträger 35 über Spaltdichtungen 86 abgedichtet werden, wodurch auch eine Fluidübergabe zwischen der Zuleitung 78 und dem Schmierkanal 34 abgedichtet ist. Eine verschleißbehaftet berührende Dichtung zur Abdichtung der Fluidübergabe zwischen der Zuleitung 78 und dem Schmierkanal 34 ist dadurch vermieden. Alternativ kann die Zuleitung in einem feststehenden Getriebegehäuse des Getriebes 18 vorgesehen sein, welches den hier beschriebenen dritten Planetenträger 35 ersetzen kann.

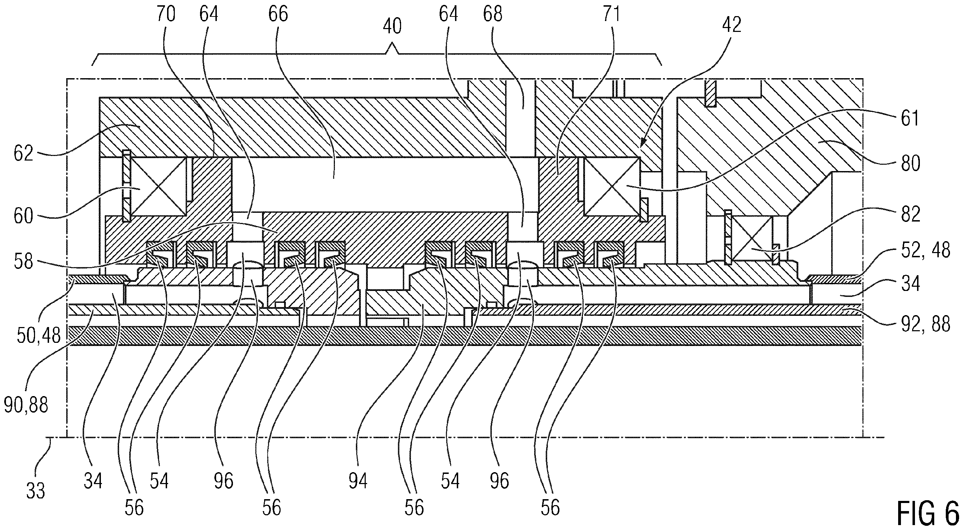

Bei der in Fig. 6 dargestellten Ausführungsform des Getriebes 18 ist im Vergleich zu der in Fig. 2 und Fig. 3 dargestellten Ausführungsform des Getriebes 18 der Schmierkanal 34 radial innen nicht durch das Pitchrohr 32, sondern ein separates Innenrohr 88 begrenzt, das in radialer Richtung zwischen dem Pitchrohr 32 und dem Hüllrohr 48 angeordnet ist. Im dargestellten Ausführungsbeispiel ist das Innenrohr 88 analog zum Hüllrohr 48 durch ein erstes Teilinnenrohr 90 und ein zweites Teilinnenrohr 92 zusammengesetzt. Das erste Teilhüllrohr 50 und das erste Teilinnenrohr 90 einerseits und das zweite Teilhüllrohr 52 und das zweite Teilinnenrohr 92 sind im Übergangsbereich 40 über ein den Schmierkanal 34 axial verschließendes Endstück 94 miteinander verbunden. Das Endstück 94 ist vorzugsweise mehrteilig, insbesondere zweiteilig, ausgeführt, so dass der jeweilige Endstückteil mit der jeweiligen Seite des Hüllrohrs 48 und des Innenrohrs 88 vormontiert sein kann und die Endstückteile bei der Montage des Hüllrohrs 48 und des Innenrohrs 88 zu dem gemeinsamen Endstück 94 miteinander verbunden werden können. Im dargestellten Ausführungsbeispiel weisen das erste Teilhüllrohr 50 und das zweite Teilhüllrohr 52 mindestens eine Querbohrung 96 auf, die mit der Ringnut 54 fluidisch kommuniziert. Die jeweilige Ringnut 54 ist in diesem Fall nur in der Lagerbuchse 58 ausgebildet. Die jeweiligen Ringnuten 54 sind über die in axialer Richtung entsprechend lang ausgeführte Ringkammer 66 fluidisch verbunden. Der Schmierkanal 34 kann dadurch in einen im Bereich des ersten Teilhüllrohrs 50 begrenzten ersten Teilschmierkanal und in einen im Bereich des zweiten Teilhüllrohrs 52 begrenzten zweiten Teilschmierkanal unterteilt sein, wobei der erste Teilschmierkanal und der zweite Teilschmierkanal über die Ringkammer 66 fluidisch miteinander verbunden sind.

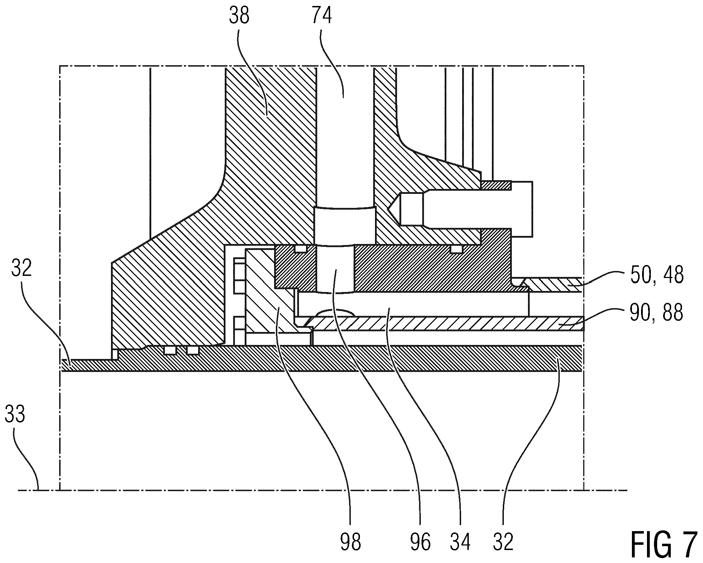

Wie in Fig. 7 dargestellt ist, ist im Vergleich zu der in Fig. 4 dargestellten Ausführungsform des Getriebes 18 das erste Teilhüllrohr 50 mit dem ersten Teilinnenrohr 90 über ein den Schmierkanal 34 axial verschließendes erstes Außenstück 98 miteinander verbunden. Das erste Teilhüllrohr 50 kann ebenfalls mindestens eine Querbohrung 96 aufweisen, um eine fluidische Verbindung des Schmierkanals 34 mit dem weiteren Versorgungskanal 74 herbeizuführen.

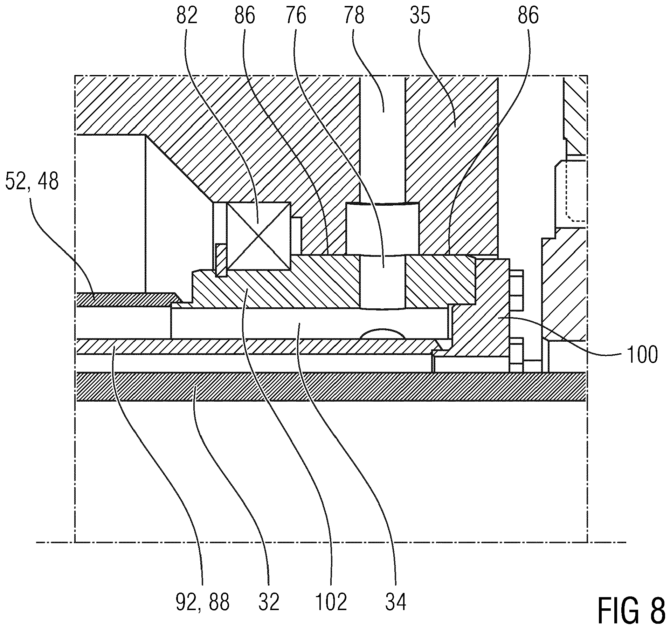

Wie in Fig. 8 dargestellt ist, ist im Vergleich zu der in Fig. 5 dargestellten Ausführungsform des Getriebes 18 das zweite Teilhüllrohr 52 mit dem zweiten Teilinnenrohr 92 über ein den Schmierkanal 34 axial verschließendes zweites Außenstück 100 miteinander verbunden. Zudem ist es möglich, dass das zweite Teilhüllrohr 52 eine weitere Lagerbuchse 102 aufweist, mit deren Hilfe die Spaltdichtungen 86 ausgebildet ist. Alternativ kann das zweite Teilhüllrohr 52 einteilig ausgeführt sein, wie in Fig. 5 dargestellt ist. Außerdem kann das in Fig. 5 dargestellte zweite Teilhüllrohr 52 ebenfalls die weitere Lagerbuchse 102 aufweisen, wie in Fig. 8 dargestellt ist. Wenn die weitere Lagerbuchse 102 vorgesehen ist, kann das zweite Außenstück 100 vorzugsweise an einer axialen Stirnseite der weiteren Lagerbuchse 102 anliegen und, insbesondere durch Verschrauben, befestigt werden. Die weitere Lagerbuchse 102 kann für diesen Zweck eine größere Materialdicke in radialer Richtung als das übrige zweite Teilhüllrohr 52 aufweisen.

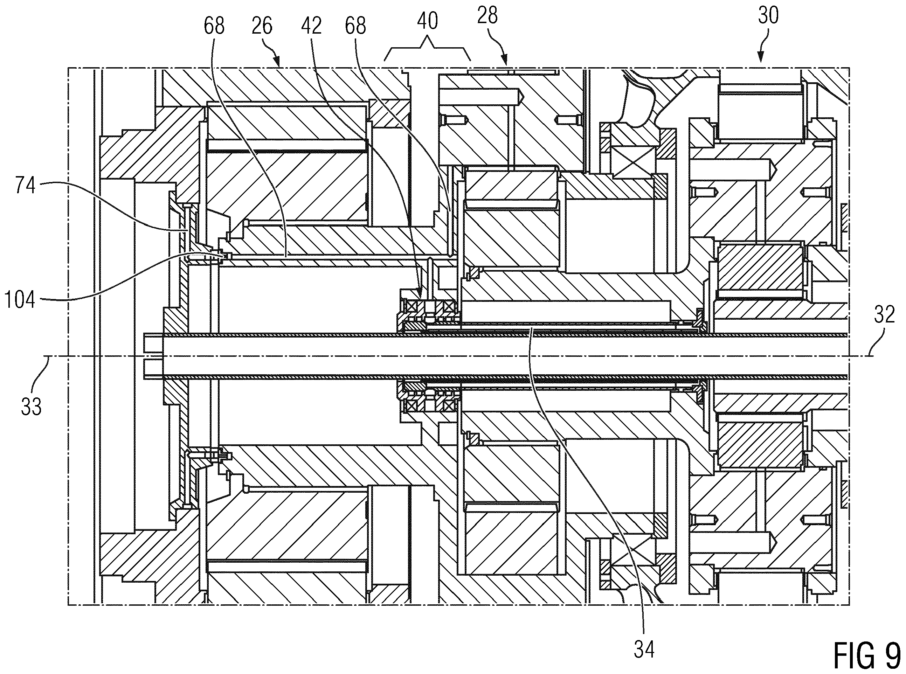

Bei der in Fig. 9 dargestellten Ausführungsform des Getriebes 18 ist im Vergleich zu der in Fig. 6 dargestellten Ausführungsform des Getriebes 18 das erste Teilhüllrohr 50 und das erste Teilinnenrohr 90 entfallen. Um die erste Getriebestufe 26 ausreichend zu schmieren, ist nicht der Schmierkanal 34, sondern der Versorgungskanal 68 bis in den ersten Planetenträger 38 geführt. Zwischen dem entlang der ersten Sonnenwelle 46 geführten Teil des Versorgungskanals 68 und dem in dem ersten Planetenträger 38 vorgesehenen weiteren Versorgungskanal 74 kann eine in axialer Richtung wirksame Fluidübergabe 104 vorgesehen sein, wie sie beispielsweise in WO 2006/053940 A1 beschrieben ist, auf deren Inhalt bezüglich der in axialer Richtung wirksamen Fluidübergabe hiermit als Teil der Erfindung Bezug genommen wird.

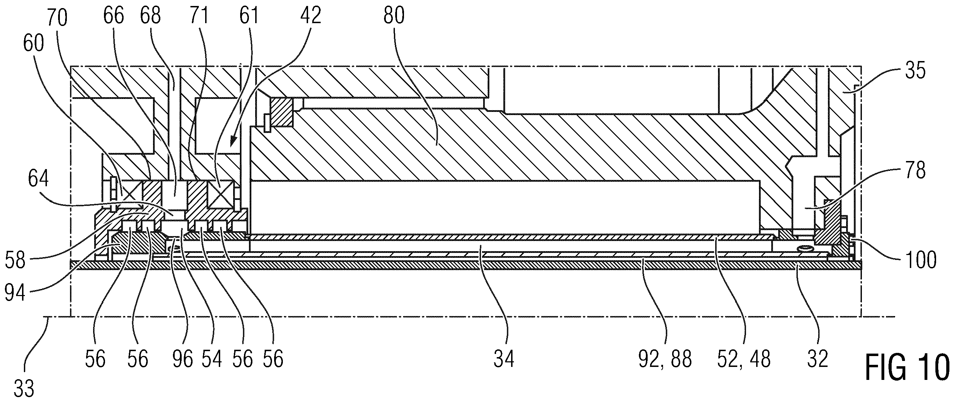

Wie in Fig. 10 dargestellt ist, kann das Hüllrohr 48 und das Innenrohr 88 über das, insbesondere zumindest zweiteilige, zweite Außenstück 100 drehfest mit demjenigen Bauteil verbunden werden, das die Zuleitung 78 aufweist. Im dargestellten Ausführungsbeispiel ist die Zuleitung 78 von dem dritten Planetenträger 35 ausgebildet, wobei alternativ die Zuleitung 78 von dem feststehenden Getriebegehäuse ausgebildet sein kann. Eine Relativdrehung der Zuleitung 78 zu dem Schmierkanal 34 ist vermieden, so dass eine hohe Dichtigkeit für die Fluidübergabe gegeben ist. Wellenlager 82 sind dadurch eingespart. Die Fluidübergabe zum Versorgungskanal 68 kann analog zur Ausgestaltung in Fig. 3 und Fig. 6 erfolgen. Das Innenrohr 88 kann über das Endstück 94 und die zugeordnete Dichteinheit 56 mit der Lagerbuchse 58 befestigt sein, während das Hüllrohr 48 ohne zwischengeschaltetes Endstück 94 über die zugeordneten Dichteinheiten 56 mit der Lagerbuchse 58 befestigt ist. Je nach Ausgestaltung, insbesondere der axialen Länge des Hüllrohrs 48 ist mindestens eine Querbohrung 96 in dem Hüllrohr 48 vorgesehen oder es ist zwischen dem Endstück 94 und der axialen Stirnseite des Hüllrohrs 48 die Ringnut 54 ausgebildet.

## Patentansprüche

1. Getriebe (18), insbesondere Windkraftgetriebe für eine industrielle Windkraftanlage (10), mit
einer ersten Getriebestufe (26) zur Wandlung einer Drehzahl,
einer in einem Drehmomentfluss der ersten Getriebestufe (26) unmittelbar nachfolgenden zweiten Getriebestufe (28) zur Wandlung einer von der ersten Getriebestufe (26) eingeleiteten Drehzahl,
einem einen Schmierkanal (34) radial außen begrenzenden Hüllrohr (48) und
einer in einem Übergangsbereich (40) zwischen der ersten Getriebestufe (26) und der zweiten Getriebestufe (28) vorgesehenen Lageranordnung (42) zur zumindest mittelbaren Lagerung des Hüllrohrs (48),
wobei die Lageranordnung (42) ein erstes Lager (60) und ein zu dem ersten Lager (60) axial versetztes zweites Lager (61) aufweist und in axialer Richtung zwischen dem ersten Lager (60) und dem zweiten Lager (61) ein in radialer Richtung verlaufender und mit dem Schmierkanal (34) fluidisch kommunizierender Versorgungskanal (68) zur Versorgung der erste Getriebestufe (26) und/oder der zweiten Getriebestufe (28) mit Schmiermittel aus dem Schmierkanal (34) vorgesehen ist.

2. Getriebe (18) nach Anspruch 1, wobei das erste Lager (60) nur über einen ersten Leckagespalt (70) zur Schmierung des ersten Lagers (60) und/oder das zweite Lager (61) nur über einen zweiten Leckagespalt (71) zur Schmierung des zweiten Lagers (60) mit dem Versorgungskanal (68) fluidisch kommuniziert.

3. Getriebe (18) nach Anspruch 1 oder 2, wobei das Hüllrohr (48) an mindestens einen Innenring der Lageranordnung (42) über mindestens ein in radialer Richtung elastisches Stützelement (56) befestigt ist, wobei der Stützelement (56) zum elastischen Ausgleich eines Radialversatzes zwischen der ersten Getriebestufe (26) und der zweiten Getriebestufe (28) dimensioniert ist.

4. Getriebe (18) nach einem der Ansprüche 1 bis 3, wobei das Hüllrohr (48) ein zu einem Großteil in der ersten Getriebestufe (26) verlaufendes erstes Teilhüllrohr (50) und ein zu einem Großteil in der zweiten Getriebestufe (28) verlaufendes zweites Teilhüllrohr (52) aufweist, wobei das erste Teilhüllrohr (50) und das zweite Teilhüllrohr (52) zur Ausbildung einer mit dem Versorgungskanal (34) fluidisch kommunizierenden Ringnut (54) in axialer Richtung zueinander beabstandet angeordnet sind.

5. Getriebe (18) nach Anspruch 4, wobei ein von dem ersten Teilhüllrohr (50) begrenzter erster Teilschmierkanal und ein von dem zweiten Teilhüllrohr (52) begrenzter zweiter Teilschmierkanal über eine zwischen dem ersten Lager (60) und dem zweiten Lager (61) freigehaltene Ringkammer (66) fluidisch verbunden ist.

6. Getriebe (18) nach einem der Ansprüche 1 bis 5, wobei das Hüllrohr (48) mit einer von dem ersten Lager (60) und dem zweiten Lager (61) gelagerten Lagerbuchse (58) drehfest verbunden ist.

7. Getriebe (18) nach einem der Ansprüche 1 bis 6, wobei das Hüllrohr (48) und ein Pitchrohr (32) zur Durchfuhr von Leitungen einer Blatteinstellwinkelregelung für einen Windrotor (12) mit einer gemeinsamen Getriebekomponente drehfest befestigt sind, wobei eine radial äußere Mantelfläche des Pitchrohrs (32) den Schmierkanal (34) zumindest über einen axialen Teilbereich radial innen begrenzt.

8. Getriebe (18) nach einem der Ansprüche 1 bis 7, wobei an einer zu der Lageranordnung (42) axial beabstandeten Fluidübergabe zwischen dem Hüllrohr (48) und einem relativ drehbaren Bauteil eine berührungslose Spaltdichtung (86) vorgesehen ist.

9. Getriebe (18) nach einem der Ansprüche 1 bis 8, wobei ein Innenrohr (88) zur radial inneren Begrenzung des Schmierkanals (34) vorgesehen ist, wobei das Innenrohr (88) über ein den Schmierkanal (34) axial verschließendes Endstück (94) drehfest mit dem Hüllrohr (48) und/oder mit der/einer Lagerbuchse (58) der Lageranordnung (42) verbunden ist.

10. Getriebe (18) nach einem der Ansprüche 1 bis 9, wobei die erste Getriebestufe (26) und die zweite Getriebestufe (28) als Planetengetriebe ausgestaltet sind, wobei die Lageranordnung (42) an einer Sonnenwelle (46) der ersten Getriebestufe (26) und/oder an einem Planetenträger (35) der zweiten Getriebestufe (28) lagert.

11. Getriebe (18) nach einem der Ansprüche 1 bis 10, wobei der Versorgungskanal (68) sowohl zu zumindest einer Getriebekomponente der ersten Getriebestufe (26) als auch zu einer Getriebekomponente der zweiten Getriebestufe (28) führt.

12. Antriebsstrang (14) für eine industrielle Windkraftanlage (10) mit einem Getriebe (18) nach einem der Ansprüche 1 bis 11 zur Wandlung einer durch Windkraft eingeleiteten Drehzahl.

13. Antriebsstrang (14) nach Anspruch 12, wobei eine von der zweiten Getriebestufe (28) wegweisende Eingangsseite der ersten Getriebestufe (26) mit einem windkraftbetriebenen Windrotor (12) gekoppelt ist, wobei eine von der ersten Getriebestufe (26) wegweisende Ausgangsseite der zweiten Getriebestufe (28) mittelbar oder unmittelbar mit einem Rotor einer elektrischen Maschine (20) zur Erzeugung von elektrischer Energie aus Windkraft gekoppelt ist.

14. Industrieapplikation mit einem Antriebsmittel, einem drehmomentübertragend mit dem Antriebsmittel verbundenen Getriebe (18) nach einem der Ansprüche 1 bis 11 und einer drehmomentübertragend mit dem Getriebe (18) verbundenen mechanischen Anwendung.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Getriebe (18) nach einem der Ansprüche 1 bis 11 vorgesehenen Bestandteile, wobei die Datenpakete dazu hergerichtet sind
bei einer Verarbeitung durch eine Datenverarbeitungseinrichtung zum Betrieb einer Werkzeugmaschine zur additiven Fertigung von Vorrichtungen eine additive Herstellung der Bestandteile des Getriebes (18), insbesondere durch 3D-Druck, durchzuführen
und/oder
bei einer Verarbeitung durch eine Datenverarbeitungseinrichtung zur Durchführung einer technischen Simulation eine Simulation der Funktionsweise des Getriebes (18) durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
